# EUROPÄISCHE PATENTSCHRIFT

(11) **EP 3 820 686 B1**
(45) Veröffentlichungstag und Bekanntmachung des Hinweises auf die Patenterteilung: **21.09.2022**
(21) Anmeldenummer: 18742738.0
(22) Anmeldetag: 10.07.2018
(51) Int. Cl.: B29D 29/08

(54) **VERFAHREN ZUM HERSTELLEN VON TREIBRIEMEN**
METHOD FOR PRODUCING DRIVING BELTS
PROCÉDÉ DE FABRICATION DE COURROIES DE TRANSMISSION

(43) Veröffentlichungstag der Anmeldung: 19.05.2021
(73) Patentinhaber: Walther Flender GmbH, 40593 Düsseldorf (DE)
(72) Erfinder: SCHOLZEN, Andreas, Dr., 47447 Moers (DE)
(74) Vertreter: Cohausz & Florack
(86) Internationale Anmeldenummer: PCT/EP2018/068690
(87) Internationale Veröffentlichungsnummer: WO 2020/011342

(56) Entgegenhaltungen:
- EP-A1- 1 537 984
- EP-A2- 0 280 175
- WO-A1-93/18315
- WO-A1-2017/153021
- DE-A1- 2 359 216
- DE-A1-102011 121 656
- FR-A1- 2 665 737
- US-A1- 2012 071 286

## Beschreibung

Die Erfindung betrifft ein Verfahren zum Herstellen von Treibriemen.

Ein Verfahren dieser Art ist aus der WO 2017/153021 A1 bekannt. Bei dem bekannten Verfahren werden in einem ersten Arbeitsschritt ein Formkern und eine Außenform eines Gießwerkzeugs bereitgestellt. Dabei sind die Umfangsflache des Formkerns oder die Innenumfangsflache der Außenform mit einer am Treibriemen abzubildenden Geometrie versehen. Auf die Geometrie wird in einem weiteren Arbeitsschritt eine Textillage gelegt. Der Formkern wird in einem dritten Arbeitsschritt in die Außenform gesetzt, so dass der Formkern und die Außenform zwischen sich eine Kavität begrenzen. Optional kann hier ein Zugträger in der Kavität angeordnet und die Kavität zumindest im Bereich der am Treibriemen abzubildenden Geometrie gegenüber der Umgebung abgedichtet werden. Nach dem Positionieren des Formkerns in der Außenform wird die Textillage in einem vierten Arbeitsschritt an die die Geometrie begrenzenden Flächen angelegt, wobei das Anlegen der Textillage an die die Geometrie bildenden Flächen durch Erzeugen eines Unterdrucks im Bereich der Freiräume unterstützt wird, die nach dem Anlegen der Textillage zwischen ihr und der Geometrie vorhanden sind. Daraufhin wird ein Elastomer-Basismaterial in die Kavität des Gießwerkzeugs eingebracht und dort gehalten, bis es verfestigt ist. Schließlich kann der Riemenwickel aus dem Gießwerkzeug entformt werden und in üblicher Weise zu einzelnen Treibriemen konfektioniert werden.

Mit dem bekannten Verfahren ist eine gegenüber der konventionellen Vorgehensweise bei der Produktion von Treibriemen auf Elastomerbasis vereinfachte Herstellung insbesondere von Zahnriemen möglich. Dabei können auch alternative Materialien, wie Kautschuk-Materialien, beispielsweise Naturkautschuk oder Synthesekautschuk, Materialien auf Silikonbasis, als Basis für die Treibriemenherstellung verwendet werden.

Neben dem voranstehend erläuterten Stand der Technik ist aus der EP 0 280 175 A2 ein Verfahren zum Herstellen eines Riemens bekannt, der einen Bandhauptkörper, der aus einem flüssig gießbaren elastomeren Material hergestellt ist, eine textile Lage, die über der Oberfläche des Hauptkörpers vorgesehen ist, und eine stoßabsorbierende Schicht aus elastomerem Material aufweist, die zwischen dem Hauptkörper und der textilen Lage vorgesehen ist. Der Riemen hat die Form eines Flachriemens oder eines Zahnriemens mit Zähnen auf mindestens einer Seite. Die stoßabsorbierende Schicht soll ihm eine verbesserte Biegefestigkeit und ein verbessertes Laufverhalten verleihen. Dabei lässt sich ein solcher Riemen durch ein Verfahren herstellen, bei dem die stoßabsorbierende Schicht aus Elastomermaterial auf einer Oberfläche der textilen Lage gebildet wird, bei dem das so beschichtete Gewebe an einem inneren Kern einer Gießform befestigt wird und bei dem schließlich ein flüssiges elastomeres Material in einen Formraum gegossen wird, der an seiner Innenseite durch den inneren Kern und an seiner Außenseite durch einen äußeren Formkern begrenzt wird.

Ein auf einem anderen Prinzip aufbauendes Verfahren zur Herstellung eines Zahnriemens ist aus der US 2012/0071286 A1 bekannt. Bei diesem Verfahren wird ein Gewebestreifen mit vorbestimmter Breite auf einen Dorn in einem ersten Spiralwinkel gewickelt. Dann wird ein Zugträger auf den Dorn über den Gewebestreifen in einem zweiten Spiralwinkel gewickelt, der kleiner als der erste Spiralwinkel ist. Schließlich werden mehrere Streifen aus einem Elastomermaterial um den Zugträgerwickel gewickelt. Abschließend wird dann durch ein Vulkanisationsverfahren aus den so gebildeten Wickeln eine Einheit erzeugt.

Aus der WO 93/18315 ist ein weiteres alternatives Verfahren zur Herstellung eines Zahnriemens bekannt. Bei diesem Verfahrens wird mindestens eine Schicht eines thermoplastischen Materials um die äußere Umfangsfläche einer Bautrommel gelegt, die auf ihrer äußerem Umfangsfläche eine durch abwechselnde Zähne und Rillen definierte Geometrie besitzt. Anschließend wird die thermoplastische Schicht unter Wärmezufuhr gegen die Trommel gedrückt, so dass die Geometrie des Außenumfangs der Trommel an der thermoplastischen Schicht abgeformt wird. Die Wärmezufuhr wird dabei so dosiert, dass die Temperatur des thermoplastischen Materials über dessen Erweichungstemperatur und unter dessen Schmelztemperatur liegt, so dass mindestens ein Teil der Schicht aus thermoplastischem Material in die Rillen eintritt, um so die Zähne des herzustellenden Riemens abzubilden. Vor dem Aufbringen des thermoplastischen Materials kann eine textile Lage auf die Geometrie der Bautrommel gelegt und um die textile Lage eine Zugträgerlage gewickelt werden.

Ausgehend von dem voranstehend erläuterten Stand der Technik hat sich die Aufgabe gestellt, das bekannte Verfahren weiter zu vereinfachen.

Die Erfindung hat diese Aufgabe durch das in Anspruch 1 angegebene Verfahren gelöst.

Vorteilhafte Ausgestaltungen der Erfindung sind in den abhängigen Ansprüchen angegeben und werden wie der allgemeine Erfindungsgedanke nachfolgend im Einzelnen erläutert.

Das erfindungsgemäße Verfahren zur Herstellung eines Treibriemens umfasst somit mindestens folgende Arbeitsschritte:
a) Bereitstellen eines Formkerns und einer Außenform eines Gießwerkzeugs, wobei der Formkern dazu vorgesehen ist, in die Außenform eingesetzt zu werden, so dass zwischen der Außenform und dem in ihr sitzenden Formkern eine die Form des herzustellenden Treibriemens abbildende Kavität gebildet ist, und wobei die der Kavität zugeordnete Umfangsfläche des Formkerns oder die der Kavität zugeordnete Innenumfangsfläche der Außenform mit einer am Treibriemen abzubildenden Geometrie versehen ist, die Erhebungen, die beabstandet zueinander angeordnet sind und jeweils eine beabstandet zu einer Grundfläche der Geometrie angeordnete Kopffläche sowie an gegenüberliegenden Seiten Seitenflächen aufweisen, wobei einander gegenüberliegende Seitenflächen von zueinander benachbarten Erhebungen und jeweils eine zwischen zwei benachbarten Erhebungen vorhandene Grundfläche jeweils eine Lücke der Geometrie begrenzen;
b) Auflegen einer Textillage auf die Geometrie derart, dass die Textillage einerseits auf den Kopfflächen der Erhebungen abgestützt ist und dass sich andererseits jeweils ein Abschnitt der Textillage über jede der Lücken der Geometrie erstreckt;
c) Auflegen eines Zugträgers auf die mit der Textillage belegten Geometrie derart, dass der Zugträger auf den Kopfflächen der Erhebungen der Geometrie abgestützt ist und einerseits die Textillage im Bereich der Kopfflächen der Erhebungen zwischen dem Zugträger und der jeweiligen Kopffläche fixiert ist sowie andererseits in jeder Lücke ein Zwischenraum zwischen dem sich über die jeweilige Lücke erstreckenden Abschnitt der Textillage und dem die betreffende Lücke überspannenden Abschnitt des Zugträgers begrenzt ist;
d) Einsetzen des Formkerns in die Außenform;
e) Einbringen eines gießfähigen Elastomer-Basismaterials in die zwischen der Außenform und dem in ihr sitzenden Formkern vorhandenen Kavität derart, dass die Kavität einschließlich der im Bereich der Lücken von dem Abschnitt der Textillage und dem Zugträger begrenzten Zwischenräume mit dem Elastomer-Basismaterial gefüllt werden, wobei die den Lücken der Geometrie zugeordneten Abschnitte der Textillage von dem Elastomer-Basismaterial gegen die Seitenflächen der Erhebungen und die zugeordnete Grundfläche der jeweiligen Lücke gedrückt werden, wobei der Bereich der Textillage, der die Lücken ausformt, stärker gedehnt wird als der Bereich der Textillage, der von den Zugträgern auf den Kopfflächen der Erhebungen der Geometrie festgehalten wird;
f) optional: Nachdrücken von Elastomer-Basismaterial nach der vollständigen Füllung der Kavität und der Lückenbereiche mit dem Basismaterial, um eine Druckerhöhung in der Kavität zu bewirken;
g) optional: Aufrechterhalten des auf das Elastomer-Basismaterial wirkenden Drucks solange, bis das Elastomer-Basismaterial ausreichend fest geworden ist;
h) Entformen des erhaltenen Treibriemenwickels;
i) optional: Abteilen des Treibriemens von dem Riemenwickel.

Das erfindungsgemäße Verfahren setzt auf das aus der der WO 2017/153021 A1 bekannte Verfahren auf.

Wenn im vorliegenden Text eine Maßnahme, ein Arbeitsschritt oder ein Merkmal als "optional" bezeichnet ist, dann ist damit gemeint, dass diese Maßnahme, dieser Arbeitsschritt oder dieses Merkmal jeweils nicht notwendig Bestandteil der Erfindung ist, sondern wahlweise verwirklicht werden kann, um den im Zusammenhang mit der betreffenden optionalen Maßnahme, dem betreffenden optionalen Arbeitsschritt oder dem betreffenden optionalen Merkmal erläuterten Vorteil oder Effekt zu erzielen.

Für das erfindungsgemäße Verfahren wird folglich ein Gießwerkzeug mit einer Außenform und einem in die Außenform eingesetzten Formkern verwendet.

Hierzu wird ein Formkern oder eine Außenform bereitgestellt, von denen mindestens der Formkern an seinem oder die Außenform an ihrem Umfang mit der am Riemen abzubildenden Geometrie versehen ist. Die Geometrie besteht dabei aus Erhebungen, von denen jeweils zwei, ähnlich wie bei einer Zahnradgeometrie, durch eine Lücke voneinander getrennt sind.

Im Fall, dass mit dem erfindungsgemäßen Verfahren ein Zahnriemen hergestellt werden soll, handelt es sich bei dieser Geometrie um das Negativ der am Riemen abzubildenden Zahngeometrie.

Im Unterschied zum eingangs erläuterten Stand der Technik wird beim erfindungsgemäßen Verfahren die Textillage vor dem Einsetzen des Gießkerns in die Außenform des Gießwerkzeugs mittels des Zugträgers an der Geometrie fixiert. Der Zugträger wird dazu auf die Geometrie aufgelegt und dabei an den Kopfflächen der Erhebungen so abgestützt, dass die Textillage mit ihren dann zwischen den Kopfflächen der Erhebungen und dem Zugträger liegenden Abschnitten zwischen Zugträger und den Kopfflächen der Erhebungen eingespannt ist. Im Bereich der Lücken der Geometrie ergeben sich dagegen zwischen dem Zugträger und der Textillage Zwischenbereiche, die an ihrer einen Seite durch den Zugträger und an ihren anderen Seiten durch die mehr oder weniger schlaff sich über die Lücke erstreckenden Abschnitte der Textillage begrenzt sind.

Insbesondere dann, wenn die Geometrie am Außenumfang eines Formkerns ausgebildet ist, ist es aus herstellungstechnischer Sicht vorteilhaft, den Zugträger in Form eines Zugträger-Strangs aufzulegen. Ein solcher Zugträger kann auf einfache Weise um den Formkern gewickelt werden. Dabei kann der Zugträger in zwei oder mehr verlaufenden Strängen aufgelegt werden, um ein besonders hohes Lastaufnahmevermögen zu erzielen. Zur Optimierung des Lastaufnahmevermögens kann dabei insbesondere beitragen, dass zwei oder mehr Zugträgerstränge parallel zueinander verlaufend auf die Textillage aufgebracht werden. Auch können die einzelnen Stränge der Zugträger aus unterschiedlichen Materialien bestehen, um durch eine Kombination von Zugträgern mit unterschiedlichen Eigenschaften ein optimales Verhalten beim Gebrauch von in erfindungsgemäßer Weise erzeugten Treibriemen zu gewährleisten.

Die erfindungsgemäße Fixierung der Textillage an der Geometrie kann im Fall, dass die Geometrie an der Innenumfangsfläche der Außenform ausgebildet ist, mit geeigneten Halteelementen vorgenommen werden, die den Zugträger gegen die Kopfflächen der Erhebungen der Geometrie gedrückt halten und so die erfindungsgemäße Fixierung der Textillage an der Geometrie bewirken. So können die Halteelemente beispielsweise als längs- oder radialverschiebbare Schieber, Stangen, Stifte oder desgleichen ausgebildet sein. Die Halteelemente können dabei so geformt sein, dass es zu einer Linienberührung mit dem Zugträger kommt. Hierzu können auch Halteelemente in Form von Schwertern, Schienen oder Stäben eingesetzt werden. Diese sind insbesondere dann geeignet, wenn die am Treibriemen abzubildende Geometrie an der Außenumfangsfläche des Formkerns ausgebildet ist. Bei einer Fertigung, bei der die Zähne an der Rückenseite des Zahnriemens geformt werden, kann, abhängig von der Form des jeweiligen Werkzeugkerns, als Halteelement auch ein Stützring oder eine Stützschiene eingesetzt werden. Während der Formkern in die Außenform gesetzt wird, behalten die Halteelemente ihre Position bei und können anschließend, während die Kavität des Gießwerkzeugs gefüllt wird oder nachdem die Kavität des Gießwerkzeugs mit Elastomer-Basismaterial gefüllt ist, aus dem Gießwerkzeug entfernt werden. So ist es beispielsweise möglich, die Halteelemente nach einem Einspritzen einer ersten Portion des Elastomer-Basismaterials schrittweise oder kontinuierlich unter Zurücklassen des dann durch das Elastomer-Basismaterial gestützten Zugträgers aus der Kavität hinauszubewegen.

Aus produktionstechnischer Sicht besonders vorteilhaft lässt sich das erfindungsgemäße Verfahren dann anwenden, wenn die Geometrie am Formkern ausgebildet ist, wenn also die Textillage auf die am Formkern vorhandene Geometrie gelegt und anschließend der Zugträger in erfindungsgemäßer Weise um den Formkern gelegt wird. Dabei erweist es sich als besonders günstig, dass der Zugträger üblicherweise als Strang von einzelnen Fasern, Faserbündeln oder Fasersträngen um den Formkern gewickelt wird und durch die dann nebeneinander verlaufenden Windungen des Zugträgers eine Zugträgerlage gebildet wird. Dies erlaubt es, eine Zugträgerlage problemlos mit einer gewissen Vorspannung um den Formkern zu legen, so dass die zum Fixeren der Textillage erforderliche Pressung zwischen den Kopfflächen der Erhebungen und der Zugträgerlage ohne Weiteres erzeugt und aufrechterhalten werden kann, bis die Textillage und die Zugträgerlage im fertigen Treibriemen durch das Elastomer-Basismaterial des Treibriemens in Position gehalten werden. Die Windungen der Zugträgerlage werden dabei zweckmäßigerweise so gewickelt, dass beim späteren Einbringen des Elastomer-Basismaterials in die Kavität des Gießwerkzeugs das Elastomer-Basismaterial durch die in der Regel feinen Durchlässe hindurchtritt, die zwischen den Windungen oder zwischen den Fasern der die Windungen bildenden Zugfaser-Stränge vorhanden sind, so dass beim in erfindungsgemäßer Weise fertig erzeugten Treibriemen die Zugträgerwindungen vollständig vom Elastomer-Basismaterial bedeckt oder ummantelt sind.

Bei der zuletzt erläuterten Variante der Erfindung wird also der Formkern mit einer vorzugweise in Form eines Schlauches über den Formkern gezogenen schlauchförmigen Textillage überzogen, um anschließend die Zugträger auf die Textillage aufzuspulen. Die Zugträgerlage steht dabei unter einer definierten Vorspannung und hält dadurch die Textillage auf der Geometrie des Formkerns fest. Jeweils auf den Köpfen der Verzahnung wird dabei das Gewebe der Textillage durch die Vorspannkraft der Zugträger fest auf die Geometrie gepresst.

Im späteren Füllprozess wird der Bereich der Textillage, der die Lücke ausformt, stärker gedehnt als der Bereich, der von den Zugträgern auf den Kopfflächen der Erhebungen der Geometrie festgehalten wird. Auf diese Weise wird der der jeweiligen Lücke zugordnete Abschnitt der Textillage beim Einbringen der Elastomer-Basismasse in die Kavität der Gießform gegen die die betreffende Lücke begrenzenden Flächen gedrückt und dort in Anlage gehalten, bis die Basismasse ausreichend verfestigt und der Formgebungsprozess abgeschlossen ist.

Eine übermäßige Dehnung der Textillage im Bereich der Lücken kann dabei dadurch vermieden werden, dass der sich über die Lücke jeweils erstreckende Bereich bereits beim Auflegen der Textillage in die jeweilige Lücke hineingezogen oder eingewölbt wird. Entsprechend sieht eine Variante der Erfindung vor, dass die Textillage im Bereich der Lücken schon beim Auflegen der Textillage an die Geometrie in die Lücken zwischen den Erhebungen der Geometrie gezogen oder gedrückt wird. Hierzu kann die Textillage im Arbeitsschritt b) oder c) des erfindungsgemäßen Verfahrens mit ihrem die jeweilige Lücke überspannenden Abschnitt jeweils so in die Lücken der Geometrie eingewölbt werden, dass die den Lücken zugeordneten Abschnitte der Textillage jeweils in Richtung Grundfläche gezogen werden, die die jeweilige Lücke begrenzen. Die Feinausrichtung der Textillage in den Lücken derart, dass die Textillage faltenfrei und exakt die Eckbereiche zwischen aufeinander treffenden Flächen füllend an den die Lücken begrenzenden Flächen anliegt, erfolgt auch hierbei durch das in die Kavität und die Lückenbereiche beim Befüllen des Gießwerkzeugs gedrückte Elastomer-Basismaterial.

Eine Vordehnung der sich über die Lücken der Geometrie erstreckenden Abschnitte der Textillage und damit einhergehend ein optimales Anlegen der betreffenden Abschnitte an die die Lücken begrenzenden Flächen kann hierbei dadurch unterstützt werden, dass während des Auflegens des Zugträgers im Bereich der Lücken der Geometrie ein Unterdruck erzeugt wird. Hierzu kann die Geometrie bereits beim Aufwickeln der Zugträger an ihren Stirnseiten luftdicht verschlossen werden und im Inneren der Lücken ein Vakuum erzeugen. Zur Beaufschlagung der Lücken mit Unterdruck kann Luft über mindestens eine Absaugöffnung abgesaugt werden, die in der Seitenfläche oder der Grundfläche der jeweiligen Lücke mündet.

Nach Abschluss des Auflegens des Zugträgers und Entfall des Unterdrucks kann sich das im Bereich der Lücken vorhandene Gewebe der Textillage entspannen und ist dann vergleichbar schlaff zwischen den im Bereich der Kopfflächen der Erhebungen eingespannten Abschnitten der Textillage gehalten. Denkbar ist hierbei auch, den Unterdruck nach dem Auflegen des Zugträgers nur um einen gewissen Betrag zu vermindern, so dass der Abschnitt der Textillage in den Lücken noch seine der Lückenform angepasste Grundform behält.

Insbesondere dann, wenn die den Lücken zugeordneten Abschnitte der Textillage vorgedehnt oder in die Lücken hineingeformt bzw. -gedrückt sind, lässt sich ein zielsicheres Befüllen des im Bereich der Lücken von der Textillage und der Zugträgerlage umgrenzten Zwischenraums mit Elastomer-Basismaterial einfach verwirklichen. Das Elastomer-Basismaterial tritt dabei üblicherweise durch die Zugträgerlage hindurch und gelangt so auch in die Zwischenräume, die im Bereich der Lücken der Geometrie von den die jeweilige Lücke jeweils überspannenden Abschnitten von Zugträger und Textillage begrenzt sind. Bei vollständiger Abschaltung des Unterdrucks kann durch eine geeignete, beispielsweise in Form von in die betreffenden Abschnitte der Kavität vom Boden her geführte Zuleitungen gewährleistet werden, dass sich auch die Lückenbereiche sicher mit Elastomer-Basismaterial füllen und dass sich dabei in Folge des Fülldrucks, mit dem das Elastomer-Basismaterial in die Kavität des Gießwerkzeugs eingebracht wird, die Textillage an die Seitenflächen der die Lücke begrenzenden Erhebungen und an die Grundfläche der betreffenden Lücke legt.

Im Fall, dass der über das Elastomer-Basismaterial beim Befüllen der Kavität des Gießwerkzeugs aufgebrachte Druck ausreichend hoch oder die den Lücken zugeordneten Abschnitte der Textillage schon vor oder beim Auflegen des Zugträgers ausreichend vorgedehnt bzw. in die jeweilige Lücke eingeformt worden sind, kann auf eine Unterdruckbeaufschlag während des Einfüllens des Elastomer-Basismaterials vollständig verzichtet werden oder die Unterdruckbeaufschlagung deutlich reduziert werden, wodurch nicht nur das Gießwerkzeug deutlich vereinfacht, sondern auch der andernfalls für die Unterdruckerzeugung erforderliche Energieverbrauch eingespart werden kann.

Alternativ oder ergänzend zu einer Unterstützung des Anlegens der Textillage an die Geometrie mittels Unterdruckbeaufschlagung können auch mechanische Hilfsmittel, wie die oben bereits im Zusammenhang mit der Anordnung des Zugträgers an eine an der Innenumfangsfläche der Außenform ausgebildeten Geometrie erwähnten Halteelemente, dienen, die die den Lücken zugeordneten Abschnitte der Textillage in die Lücken zwischen den Erhebungen der Geometrie gedrückt halten. Auch hierbei kann es sich um längsverschiebbare Schieber, Stangen, Stifte, Schwerter, Schienen, Stäbe oder desgleichen handeln. Diese sind optimalerweise so an die Form und Ausdehnung der Lücken der Erhebungen angepasst, dass sie die Textillage möglichst passgenau in Anlage an der die jeweilige Lücke begrenzenden Flächen halten, ohne mit der Zugträgerlage zu kollidieren, wenn diese auf die Kopfflächen der Erhebungen der Geometrie gelegt wird.

Erst nachdem die Textillage in der erfindungsgemäßen Weise an der Geometrie fixiert ist, wird das Gießwerkzeugs durch Einsetzen des Formkerns in die Außenform vervollständigt (Arbeitsschritt d)).

Anschließend erfolgt dann die Befüllung der Kavität des Gießwerkzeugs mit Elastomer-Basismaterial, wobei während des Füllvorgangs insbesondere auch die im Bereich der Lücken der Geometrie von der Textillage und dem Zugträger umgrenzten Bereiche mit Elastomer-Basismaterial gefüllt und dabei die Textillage in ebenso schon erläuterter Weise dicht und glatt an die die Lücken der Geometrie begrenzenden Flächen gepresst werden.

Ein besonderer Vorteil der erfindungsgemäßen Vorgehensweise ist hier, dass das Gewebe der Textillage besonders gleichmäßig gedehnt wird. In Folge dessen weist die Textillage eine gleichmäßige Stärke über die gesamte von der Textillage bedeckte Oberfläche der Geometrie des Gießwerkzeugs und, damit einhergehend, des darin geformten Treibriemens, auf. Insbesondere im kraftübertragenden Bereich des Treibriemens liegt damit die Textillage in einer Stärke vor, die eine hohe Belastbarkeit und somit eine hohe Lebensdauer gewährleistet.

Um den Aufwand für die Vordehnung der den Lücken der Geometrie zugeordneten Abschnitte der Textillage durch Unterdruck zu minimieren und das erfindungsgemäß genutzte Andrücken der Textillage an die die Lücken begrenzenden Flächen zu unterstützen, ist es vorteilhaft, wenn die Textillage für den Elastomer-Basiswerkstoff undurchlässig ist. Auf diese Weise wirkt während des Befüllens bis zur Verfestigung des Elastomer-Basismaterials ein maximaler Anpressdruck des Basismaterials, durch den gewährleistet ist, dass sich die Textillage sicher an die jeweils hierzu vorgesehenen Flächen anlegt. Soll dieser Vorgang durch Unterdruckbeaufschlagung der Lückenbereiche unterstützt werden, so ist es dazu zweckmäßig, dass die Textillage auch für Luft undurchlässig ist. Die jeweilige Undurchlässigkeit der Textillage kann dabei dadurch erreicht werden, dass die Textillage eine textile Schicht, die die erforderliche mechanische Belastbarkeit der Textillage gewährleistet, und eine von der textilen Schicht getragene Beschichtung aufweist, die die jeweilige Undurchlässigkeit der Textillage bewirkt. Die Beschichtung kann dabei beispielsweise als Folie auf die textile Schicht aufgebracht sein. Dabei versteht es sich von selbst, dass jeweils auch zwei oder mehr textile Schichten oder zwei oder mehr Beschichtungen vorgesehen sein können, um optimale Eigenschaften der Textillage im Hinblick auf die jeweilige Anforderung zu erzielen.

Das erfindungsgemäße Verfahren eignet sich gleichermaßen für die Herstellung von Treibriemen, die eine geschlossene Form aufweisen, also beispielsweise bei Nichtgebrauch kreisförmig sind, oder die nicht geschlossen sind, d.h. einen definierten Anfang und ein definiertes Ende besitzen.

Als "Textil" werden hier alle für technische Zwecke vorgesehenen, flächig sich erstreckenden Gebilde verstanden, die aus miteinander verbundenen Fäden oder Fasern hergestellt sind. Dazu gehören die durch Webverfahren hergestellten Gewebe, welche sich für die erfindungsgemäßen Zwecke besonders eignen. Es können jedoch auch Gewirke, Gestricke, Gelege und alle sonstigen Textilien zum Einsatz kommen, die beim fertigen erfindungsgemäß hergestellten Treibriemen den Zweck der dort erfindungsgemäß vorgesehenen Textillage erfüllen.

Das erfindungsgemäß für die Treibriemenherstellung verwendete, auf die am Riemen abzubildende Geometrie aufgelegte Textillage bildende Textil kann aus Polyamid oder einem alternativen Material bestehen. Dabei kann das jeweilige Textil optional Komponenten, wie Teflon-Fäden, enthalten, die im Gebrauch die Reibung reduzieren.

Die im erfindungsgemäßen Gießwerkzeug vorgesehene und am herzustellenden Treibriemen abzubildende Geometrie ist typischerweise als Zahngeometrie ausgebildet, wie sie bei heute vielfach gebräuchlichen Treibriemen üblich ist, die in der Praxis deshalb auch als "Zahnriemen" bezeichnet werden.

Der Zugträger kann aus Glasfasern, Aramidfasern, Carbonfasern, Polyesterfasern, Stahldrähten, Stahllitzen oder ein anderes als Zugträger geeignetes Material mit ausreichender Festigkeit und Flexibilität hergestellt sein. Selbstverständlich können dabei unterschiedliche Fasern miteinander kombiniert werden, um ein optimiertes Verhalten des Zugträgers unter den im Gebrauch auftretenden Belastungen zu ermöglichen. So kann es beispielsweise zweckmäßig sein, hochfeste Fasern mit besonders flexiblen Fasern zu kombinieren, um bei hoher Zugbelastbarkeit eine ebenso hohe Flexibilität des Zugträgers zu erzielen. Dabei kann an Stelle eines zu einer Zugträgerlage gewickelten Zugträger-Strangs die Zugträgerlage auch als Textilzuschnitt ausgebildet sein. Dieses Textil ist vorzugsweise so ausgebildet, dass seine Kett- und Schussfäden Öffnungen umgrenzen, die so groß sind, dass das Elastomer-Basismaterial durch sie hindurchdringen kann. Bei einem derart offenporigen, im fertigen Riemen vom Elastomer-Basismaterial durchdrungenen Textil ist auf einfache Weise eine intensive Verklammerung der Zugträgerlage mit dem Elastomer-Basismaterial gewährleistet, durch die sichergestellt ist, dass die im Betrieb auf dem Riemen lastenden Kräfte sicher vom Zugträger aufgenommen werden.

Als Elastomer-Basismaterial kommt für die erfindungsgemäßen Zwecke ein Elastomer zum Einsatz, bei dem es sich um ein Polyurethan- (Duroplast oder Thermoplast), Kautschuk-, Silikon- oder ein sonstiges für die Verwendung als Elastomer-Basismaterial für die Treibriemenherstellung geeignetes und für eine gießtechnische Verarbeitung der erfindungsgemäßen Art verwendbares Material handeln kann. Selbstverständlich können auch Mischungen oder Kombinationen dieser Materialien zum Einsatz kommen.

Das die Textillage bildende Textil oder im Fall, dass ein Zugträger-Textilzuschnitt zum Einsatz kommt, dieser Textilzuschnitt können eine Kennzeichnungseinrichtung umfassen, die beim Einsatz des fertig hergestellten Zahnriemens als passives Element den Treibriemen eindeutig identifiziert und / oder als aktives Element mindestens eine Eigenschaft oder mindestens einen Zustand des Riemens erfasst und an eine Signalerfassungseinrichtung sendet.

Optional wird das Elastomer-Basismaterial nach der Füllung der Kavität nachgedrückt und der auf das Elastomer-Basismaterial wirkende Druck aufrechterhalten, bis das Elastomer-Basismaterial fest ist. Der erhaltene Riemenwickel wird entformt und der Zahnriemen optional abgeteilt.

Nachfolgend wird die Erfindung anhand einer ein Ausführungsbeispiel darstellenden Zeichnung näher erläutert. Es zeigen jeweils schematisch:
- Fig. 1: einen Formkern für ein Gießwerkzeug zum Herstellen eines Treibriemens in perspektivischer Ansicht;
- Fig. 2: den Formkern gemäß Fig. 1 mit einer an ihn angelegter Textillage in einer Fig. 1 entsprechenden Ansicht;
- Fig. 3: den Formkern gemäß Fig. 2 mit an ihn angelegtem Zugträger in einer Fig. 1 und 2 entsprechenden Ansicht;
- Fig. 4: ein Gießformwerkzeug zum Herstellen eines Treibriemens in einem Schnitt entlang der in Fig. 5 eingetragenen Schnittlinie X-X;
- Fig. 5: das Gießformwerkzeug gemäß Fig. 4 im für das Einbringen eines Elastomer-Basismaterials vorbereiteten Zustand in einem Schnitt entlang seiner Längsachse;

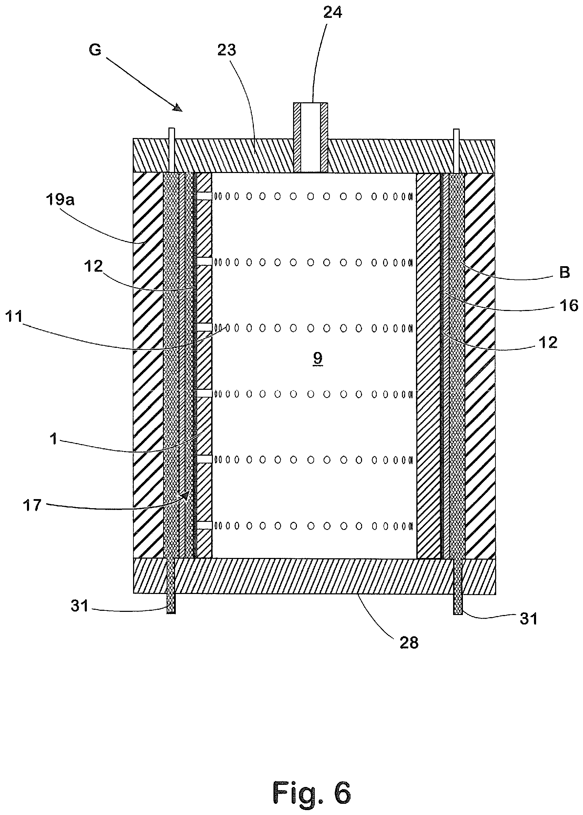

- Fig. 6: das Gießformwerkzeug gemäß Fig. 4 nach dem Befüllen mit dem Elastomer-Basismaterial in einer Fig. 5 entsprechenden Ansicht.

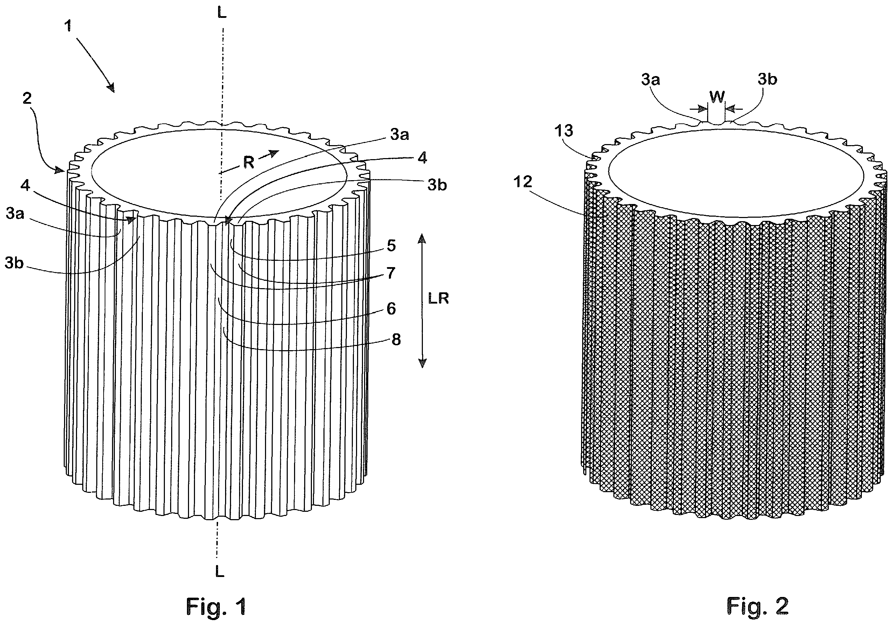

Der in Fig. 1 dargestellte rohrförmige Formkern 1 weist an einem Außenumfang eine Geometrie 2 auf, die nach Art einer Außenverzahnung aus im Wechsel angeordneten Erhebungen 3a,3b und Lücken 4 ausgebildet ist, von denen jeweils eine Lücke 4 zwischen zwei Erhebungen 3a,3b vorhanden ist. Die Erhebungen 3a,3b und die Lücken 4 erstrecken sich jeweils in Längsrichtung LR des Formkerns 1 achsparallel zu dessen Längsachse L.

Die Erhebungen 3a,3b sind jeweils nach Art von Zähnen eines außenverzahnten Zahnrads geformt und weisen Seitenflächen 5,6 auf, die auf eine Kopffläche 7 der Erhebungen 3a,3b zulaufen und mit der Kopffläche 7 jeweils einen stumpfen Winkel einschließen. Mit ihrer von der Kopffläche 7 abgewandten Seite gehen die Seitenflächen 5,6 jeweils in eine Grundfläche 8 der jeweiligen Lücke 4 zwischen zwei Erhebungen 3a,3b über. Auf diese Weise ist jede Lücke 4 an ihren Längsseiten durch eine der Seitenflächen 5,6 der zueinander an der Lücke 4 benachbarten Erhebungen 3a,3b und an ihrem Boden durch die Grundfläche 8 begrenzt und die jeweilige Kopffläche 7 mit Abstand zu der Grundfläche 8 angeordnet.

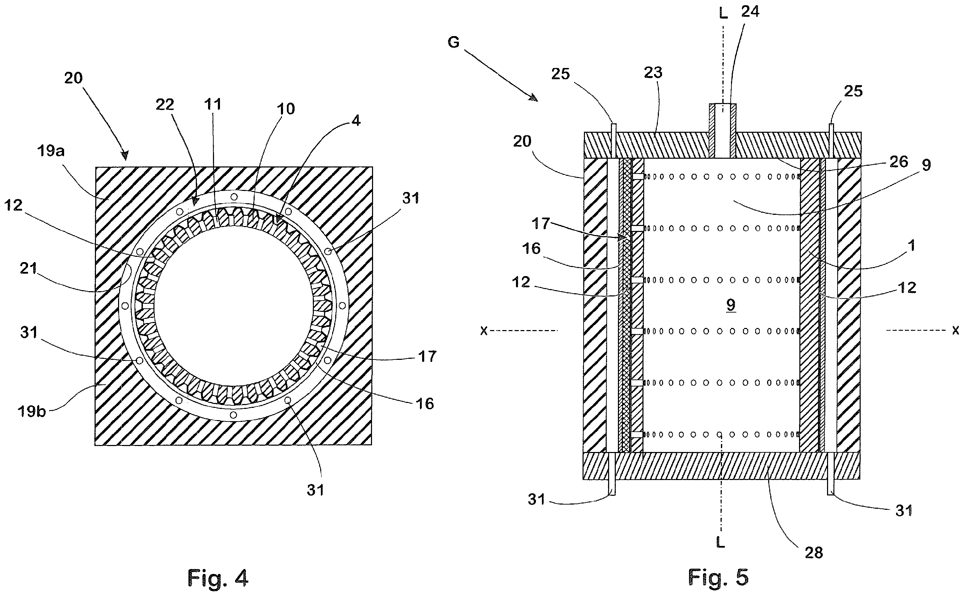

Der Formkern 1 umgrenzt einen Zylinderraum, in dem, wie in den Figuren 4 und 5 angedeutet, optional eine koaxial zum Formkern 1 ausgerichtete zentrale, den Innenraum des Formkerns 1 einnehmende Evakuierungsleitung 9 vorgesehen ist. Von der zentralen Evakuierungsleitung 9 gehen, wie in den Figuren 4 und 5 ebenfalls angedeutet, optional jeweils in radialer Richtung R durch die Umfangswand 10 des Formkerns 1 geführte Evakuierungsöffnungen 11 ab, die jeweils in der Grundfläche 8 einer der Lücken 4 münden.

Für die Herstellung eines Zahnriemen-Wickels, aus dem später eine größere Zahl von Zahnriemen abgeteilt werden kann, wird um den Formkern 1 eine Textillage 12 gelegt, die als Schlauch ausgebildet ist. Die Textillage 12 besteht dabei aus mindestens einer textilen Schicht und einer Beschichtung, die als Folie auf die textile Schicht kaschiert worden ist und auf diese Weise die Textillage 12 undurchlässig für Luft und den Elastomer-Basiswerkstoff B des herzustellenden Treibriemens macht.

Die Umfangslänge der Textillage 12 ist unter Berücksichtigung ihrer Elastizität so bemessen, dass sie im gedehnten Zustand der Länge der Konturlinie der Geometrie 2 entspricht, dass die Textillage 12 also so an die Seitenflächen 5,6 und die Kopfflächen 7 der Erhebungen sowie die Grundfläche 8 der Geometrie 2 faltenfrei angelegt werden kann.

Der so mit der Textillage 12 bestückte Formkern 1 wird anschließend mit einem Zugträger-Strang 14 von Zugträgerfasern umwickelt. Während dieses Anlegens des Zugträgers 14 an den die Textillage 12 tragenden Formkern 1 werden die Lücken 4 mit Unterdruck beaufschlagt, indem über die Evakuierungsleitung 9 und die an sie angeschlossenen Evakuierungsöffnungen 11 Luft aus dem Bereich der Lücken 4 abgesaugt wird. Durch den Unterdruck werden die die Lücken 4 jeweils frei überspannenden Abschnitte 13 der Textillage 12 in die Lücken 4 gezogen und dabei gedehnt, so dass sie sich zumindest in grober Ausrichtung in Richtung der die jeweilige Lücke 4 begrenzenden Seitenflächen 5,6 und Grundfläche 8 bewegen.

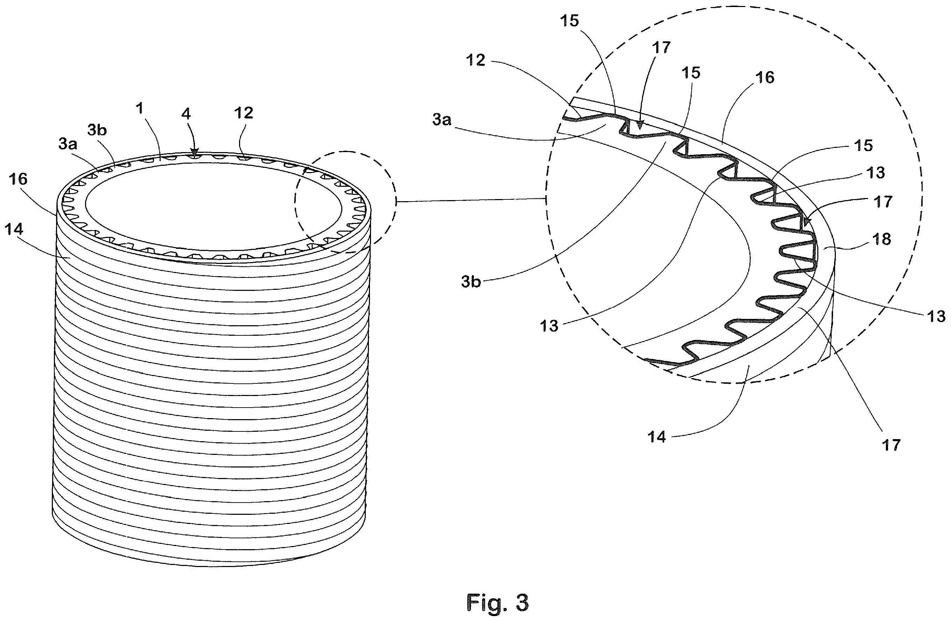

Der Zugträger-Strang 14 wird während des Wickelns unter Zugspannung gehalten, so dass die auf den Kopfflächen 7 der Erhebungen 3a,3b aufliegenden und von dem Strang 14 belasteten Abschnitte 15 der Textillage 12 mit einer für ihre Fixierung ausreichenden Anpresskraft gegen die jeweilige Kopffläche 7 gepresst werden. Der mit seinen Windungen dicht an dicht spiralförmig um den die Textillage 12 tragenden Formkern 1 gewickelte Strang 14 bildet auf diese Weise eine Zugträgerlage 16, durch die die Textillage 12 an dem Formkern 1 positionsgenau gehalten wird. Dabei besteht im Bereich der Lücken 4 zwischen der Zugträgerlage 16 und dem in die jeweilige Lücke 4 eingewölbten Abschnitt 13 der Textillage 12 jeweils ein Zwischenraum 17, der vom betreffenden Abschnitt 13 der Textillage 12 und dem die jeweilige Lücke 4 überspannenden Abschnitt 18 der Textillage 12 begrenzt ist. Gleichzeitig bestehen zwischen den einzelnen Windungen des aus dem Zugträger-Strang 14 um die Textillage 12 gebildeten Wickels geringe Abstände (Fig. 3).

Der mit der Textillage 12 belegte und mit der Zugträgerlage 16 umwickelte Formkern 1 wird in den zylindrischen Innenraum einer Außenform 20 gesetzt. Der Durchmesser des Innenraums der Außenform 20 ist so bemessen, dass zwischen der Innenumfangsfläche 21 der Außenform 20 und dem Formkern 1 eine Kavität 22 gebildet ist.

Nach dem Positionieren des Formkerns 1 wird die Kavität 22 mittels eines Deckels 23 verschlossen. Der Deckel 23 weist einen an eine hier nicht gezeigte Evakuierungseinrichtung angeschlossenen Anschluss 24 für die zentrale Evakuierungsleitung 9 auf. Gleichzeitig besitzt der Deckel 23 mindestens eine Entlüftungsöffnung 25, über die in der Kavität 22 enthaltene Luft beim Befüllen der Kavität 22 mit Elastomer-Basismaterial B entweichen kann.

Die Abstützung des Formkerns 1 an dem Deckel 23 erfolgt über die der Kavität 22 zugeordnete Stirnseite 26 des Deckels 23. Die Stirnseite 26 des Deckels 23 sitzt auf der oberen Stirnseite des Formkerns 1, so dass die dort endende Textillage 12 geklemmt und gegen Verrutschen gesichert ist.

Auf der dem Deckel 23 gegenüberliegenden Seite sitzen der Formkern 1 und die Außenschale 20 auf einem Boden 28, der die Kavität 22 an der Unterseite des Formkerns 1 abdichtet. Dabei sitzt der Formkern 1 mit seiner unteren Stirnseite auf dem Boden 28, so dass die Textillage 12 auch dort gegen ein Verrutschen auf dem Formkern 1 gesichert ist.

Des Weiteren ist durch den Boden 28 mindestens eine Düse 31 geführt, über die, nachdem der Formkern 1 mit der auf seiner Geometrie 2 liegenden Textillage 12 und der um die Textillage 12 gewickelten Zugträgerlage 16 in die Außenform 20 gesetzt worden ist, Elastomer-Basismaterial B in die Kavität 22 eingebracht wird. Beim hier gezeigten Ausführungsbeispiel sind mehrere Düsen 31 in gleichmäßigen Winkelabständen um die Längsachse L verteilt in den Boden 28 eingebracht, um eine gleichmäßige Befüllung der Kavität 22 zu begünstigen.

Das in die Kavität 22 eingebrachte Elastomer-Basismaterial B durchdringt die Zugträgerlage 16 und tritt in die Zwischenräume 17 ein. Dazu tritt das Elastomer-Basismaterial B durch die zwischen und gegebenenfalls in den Windungen des Zugträger-Strangs 14 vorhandenen Abstände, so dass die Zugträgerlage 16 von Elastomer-Basismaterial B durchdrungen und ummantelt wird.

Das auf diese Weise in die Zwischenräume 17 gelangende Elastomer-Basismaterial B drückt gegen den den jeweiligen Zwischenraum 17 umgrenzenden Abschnitt 13 der Textillage 12 und bewirkt so, dass sich der betreffende Abschnitt 13 faltenfrei gegen die Seitenflächen 5,6 und die Grundfläche 8 legt, die die jeweilige Lücke 4 begrenzen.

Das Eindrücken des Elastomer-Basismaterials B wird fortgesetzt, bis die Kavität 22 und damit einhergehend die Zwischenräume 17 vollständig mit Elastomer-Basismaterial B gefüllt sind und damit einhergehend die Seitenflächen 5,6 und die Grundfläche 8 aller Lücken 4 mit den zugeordneten Abschnitten 13 der Textillage 12 vollständig bedeckt sind.

Nach Beendigung des Füllvorgangs werden die Luftauslässe 25 verschlossen. Optional kann nun eine kurze Druckerhöhung im in der Kavität 22 vorhandenen Elastomer-Basismaterial B bewirkt werden. Das dazu mit erhöhtem Überdruck injizierte ("nachgedrückte") Elastomer-Basismaterial B erhöht die Sicherheit, mit der die Geometrie 2 des Formkerns 1 mit der Textillage 12 und dem Elastomer-Basismaterial B ausgeformt wird. Die zwischen dem Textil und der Geometrie 2 gegebenenfalls noch vorhandene Luft kann dabei über die Evakuierungsöffnungen 11 und die Evakuierungsleitung 9 entweichen.

Anschließend wird das Gießwerkzeug G, das den Formkern 1, die Außenform 20, den Deckel 23 und den Boden 28 mit den weiteren hier erläuterten Funktionselementen sowie sonstige Baugruppen umfasst, die üblicherweise für den Betrieb eines solchen Werkzeugs benötigt werden, geschlossen gehalten, bis die Elastomer-Basismasse B so weit verfestigt ist, dass der dann erhaltene Treibriemenwickel entformt werden kann. Dazu werden der Deckel 23 und der Boden 28 von der Außenform 20 gelöst und der Formkern 1 aus dem Treibriemenwickel gezogen.

Von dem erhaltenen Treibriemenwickel werden in an sich bekannter Weise Treibriemen abgeteilt, deren Breite den jeweiligen kundenseitigen Anforderungen entspricht. Diese Treibriemen weisen an ihrer einen Seite die über die Geometrie 2 des Formkerns 1 an ihnen abgebildete Verzahnung auf, während ihre gegenüberliegende Seite glatt ist. Dabei ist die Verzahnung mit der Textillage 12 bedeckt, auf deren freier, vom Elastomer-Basismaterial B des Treibriemens abgewandten Seite im vom Formkern 1 abgezogenen Zustand weder eine Hilfsfolie, noch Elastomer-Basismaterial B vorhanden ist.

Die Erfindung dient somit zur Herstellung eines Treibriemens. Hierzu werden ein Formkern 1 und eine Außenform 20 eines Gießwerkzeugs G bereitgestellt. Bei in die Außenform 20 eingesetztem Formkern 1 ist im Gießwerkzeug G eine Kavität 22 gebildet. Der Formkern 1 oder die Außenform 20 sind mit einer am Treibriemen abzubildenden Geometrie 2 versehen. Diese weist von einer Grundfläche 8 abstehende und beabstandet zueinander angeordnete Erhebungen 3a,3b auf, die eine Kopffläche 7 sowie Seitenflächen 5,6 besitzen, die mit jeweils einer zwischen zwei benachbarten Erhebungen 3a,3b vorhandenen Grundfläche 8 jeweils eine Lücke 4 der Geometrie 2 begrenzen. Auf die Geometrie 2 wird eine Textillage 12 gelegt, die auf den Kopfflächen 7 abgestützt ist und sich jeweils mit einem Abschnitt 13 über die Lücken 4 erstreckt. Auf die Textillage 12 wird ein Zugträger 14 gelegt, so dass die Textillage 12 zwischen dem Zugträger 14 und der jeweiligen Kopffläche 7 fixiert ist. Gleichzeitig ist in jeder Lücke 4 ein Zwischenraum 17 zwischen dem sich über die Lücke 4 erstreckenden Abschnitt 13 der Textillage 12 und dem die Lücke 4 überspannenden Abschnitt 18 des Zugträgers 14 begrenzt. Nach dem Einsetzen des so bestückten Formkerns 1 in die Außenform 20 wird die Kavität 22 und die Zwischenräume 17 mit einem gießfähigen Elastomer-Basismaterials B gefüllt. Dadurch werden die Abschnitte 13 der Textillage 12 von dem Elastomer-Basismaterial B gegen die Seitenflächen 5,6 der Erhebungen 3a,3b und die zugeordnete Grundfläche 8 der jeweiligen Lücke 4 gedrückt. Nach dem Verfestigen des Basismaterials kann der erhaltene Treibriemenwickel entformt werden.

### BEZUGSZEICHEN

- 1: Formkern des Gießwerkzeugs G
- 2: Geometrie des Formkerns 1
- 3a,3b: Erhebungen der Geometrie 2
- 4: Lücken der Geometrie 2
- 5,6: Seitenflächen der Erhebungen 3a,3b
- 7: Kopffläche der Erhebungen 3a,3b
- 8: Grundfläche der Lücke 4
- 9: zentrale Evakuierungsleitung
- 10: Umfangswand des Formkerns 1
- 11: Evakuierungsöffnungen
- 12: Textillage
- 13: die Lücken 4 überspannende Abschnitte der Textillage 12
- 14: Zugträger-Strang
- 15: auf den Kopfflächen 7 der Erhebungen 3a,3b aufliegende Abschnitte der Textillage 12
- 16: Zugträgerlage
- 17: von dem in die jeweilige Lücke 4 eingewölbten Abschnitt 13 der Textillage 12 und dem die Lücke 4 überspannenden Abschnitt 18 der Zugträgerlage 16 begrenzter Zwischenraum
- 18: die jeweilige Lücke 4 überspannender Abschnitt des ZugträgerStrangs 14
- 20: Außenform des Gießwerkzeugs G
- 21: Innenumfangsfläche der Außenform 20
- 22: Kavität des Gießwerkzeugs G
- 23: oberer Deckel des Gießwerkzeugs G
- 24: Anschluss für die zentrale Evakuierungsleitung 9
- 25: Entlüftungsöffnungen im Deckel 23
- 26: Stirnseite des Deckels 23
- 28: Boden des Gießwerkzeugs G
- 31: Düsen im Boden 28
- B: Elastomer-Basismaterial
- G: Gießwerkzeug
- L: Längsachse des Formkerns 1
- LR: Längsrichtung des Formkerns 1
- R: radiale Richtung

## Patentansprüche

1. Verfahren zur Herstellung eines Treibriemens, umfassend folgende Arbeitsschritte:
a) Bereitstellen eines Formkerns (1) und einer Außenform (20) eines Gießwerkzeugs (G), wobei der Formkern (1) dazu vorgesehen ist, in die Außenform (20) eingesetzt zu werden, so dass zwischen der Außenform (20) und dem in ihr sitzenden Formkern (1) eine die Form des herzustellenden Treibriemens abbildende Kavität (22) gebildet ist, und wobei die der Kavität (22) zugeordnete Umfangsfläche des Formkerns (1) oder die der Kavität (22) zugeordnete Innenumfangsfläche (21) der Außenform (20) mit einer am Treibriemen abzubildenden Geometrie (2) versehen ist, die Erhebungen (3a,3b), die beabstandet zueinander angeordnet sind und jeweils eine beabstandet zu einer Grundfläche (8) der Geometrie (2) angeordnete Kopffläche (7) sowie an gegenüberliegenden Seiten Seitenflächen (5,6) aufweisen, und wobei einander gegenüberliegende Seitenflächen (5,6) von zueinander benachbarten Erhebungen (3a,3b) und jeweils eine zwischen zwei benachbarten Erhebungen (3a,3b) vorhandene Grundfläche (8) jeweils eine Lücke (4) der Geometrie (2) begrenzen;
b) Auflegen einer Textillage (12) auf die Geometrie (2) derart, dass die Textillage (12) einerseits auf den Kopfflächen (7) der Erhebungen (3a,3b) abgestützt ist und dass sich andererseits jeweils ein Abschnitt (13) der Textillage (12) über jede der Lücken (4) der Geometrie (2) erstreckt;
c) Auflegen eines Zugträgers (14) auf die mit der Textillage (12) belegten Geometrie (2) derart, dass der Zugträger (14) auf den Kopfflächen (7) der Erhebungen (3a,3b) der Geometrie (2) abgestützt ist und einerseits die Textillage (12) im Bereich der Kopfflächen (7) der Erhebungen (3a,3b) zwischen dem Zugträger (14) und der jeweiligen Kopffläche (7) fixiert ist sowie andererseits in jeder Lücke (4) ein Zwischenraum (17) zwischen dem sich über die jeweilige Lücke (4) erstreckenden Abschnitt (13) der Textillage (12) und dem die betreffende Lücke (4) überspannenden Abschnitt (18) des Zugträgers (14) begrenzt ist;
d) Einsetzen des Formkerns (1) in die Außenform (20);
e) Einbringen eines gießfähigen Elastomer-Basismaterials (B) in die zwischen der Außenform (20) und dem in ihr sitzenden Formkern (1) vorhandenen Kavität (22) derart, dass die Kavität (22) einschließlich der im Bereich der Lücken (4) von dem Abschnitt (13) der Textillage (12) und dem Zugträger (14) begrenzten Zwischenräume (17) mit dem Elastomer-Basismaterial (B) gefüllt werden, wobei die den Lücken (4) der Geometrie (2) zugeordneten Abschnitte (13) der Textillage (12) von dem Elastomer-Basismaterial (B) gegen die Seitenflächen (5,6) der Erhebungen (3a,3b) und die zugeordnete Grundfläche (8) der jeweiligen Lücke (4) gedrückt werden, wobei der Bereich der Textillage (12), der die Lücken (4) ausformt, stärker gedehnt wird als der Bereich der Textillage (12) , der von den Zugträgern (14) auf den Kopfflächen (7) der Erhebungen (3a,3b) der Geometrie (2) festgehalten wird;
f) optional: Nachdrücken von Elastomer-Basismaterial (B) nach der vollständigen Füllung der Kavität (22) und der Lückenbereiche mit dem Basismaterial, um eine Druckerhöhung in der Kavität (22) zu bewirken;
g) optional: Aufrechterhalten des auf das Elastomer-Basismaterial (B) wirkenden Drucks solange, bis das Elastomer-Basismaterial (B) ausreichend fest geworden ist;
h) Entformen des erhaltenen Treibriemenwickels;
i) optional: Abteilen des Treibriemens von dem Riemenwickel.

2. Verfahren nach Anspruch 1,**dadurch gekennzeichnet, dass** die Textillage (12) während des Auflegens des Zugträgers (14) (Arbeitsschritt c)) mit ihren sich über die jeweilige Lücke (4) erstreckenden Abschnitten (13) in die jeweilige Lücke (4) der Geometrie (2) hineingezogen wird.

3. Verfahren nach Anspruch 2, **dadurch gekennzeichnet, dass** während des Auflegens des Zugträgers (12) auf die Geometrie (2) im Bereich der Lücken (4) ein Unterdruck erzeugt wird.

4. Verfahren nach Anspruch 3, **dadurch gekennzeichnet, dass** zur Beaufschlagung der Lücken (4) mit Unterdruck Luft über mindestens eine Evakuierungsöffnung (9,11) abgesaugt wird, die in einer der Seitenflächen (5,6) oder der Grundfläche (8) mündet, welche die jeweilige Lücke (4) begrenzen.

5. Verfahren nach einem der voranstehenden Ansprüche, **dadurch gekennzeichnet, dass** die Geometrie (2), an der die Textillage (12) mittels des Zugträgers (14) fixiert wird, am Formkern (1) ausgebildet ist.

6. Verfahren nach einem der voranstehenden Ansprüche, d a **dur**c h **gekennzeichnet**, **dass** die Textillage (12) schlauchförmig ausgebildet ist.

7. Verfahren nach einem der voranstehenden Ansprüche, **dadurch gekennzeichnet, dass** der Zugträger (14) in zwei oder mehr Strängen auf die Textillage (12) aufgelegt wird.

8. Verfahren nach Anspruch 7, **dadurch gekennzeichnet, dass** die Zugträger-Stränge parallel zueinander verlaufend auf die Textillage (12) aufgelegt werden.

9. Verfahren nach einem der voranstehenden Ansprüche, **dadurch gekennzeichnet, dass** die Textillage (12) für den Elastomer-Basiswerkstoff undurchlässig ist.

10. Verfahren nach einem der voranstehenden Ansprüche, **dadurch gekennzeichnet, dass** die Textillage (12) für Luft undurchlässig ist.

11. Verfahren nach Anspruch 9 oder 10, **dadurch gekennzeichnet, dass** die Textillage (12) eine textile Schicht und eine von der textilen Schicht getragene Beschichtung aufweist, die die jeweilige Undurchlässigkeit der Textillage (12) bewirkt,

12. Verfahren nach Anspruch 11, **dadurch gekennzeichnet, dass** die Beschichtung eine auf die textile Schicht aufgebrachte Folie ist.

## Claims

1. Method for manufacturing a drive belt comprising the following work steps:
a) providing a mould core (1) and an outer mould (20) of a casting tool (G), wherein the mould core (1) is provided to be inserted into the outer mould (20) such that a cavity (22) representing the shape of the drive belt to be manufactured is formed between the outer mould (20) and the mould core (1) sitting inside it, and wherein the circumferential surface of the mould. core (1) assigned to the cavity (22) or the inner circumferential surface (21) of the outer mould (20) assigned to the cavity (22) is provided with a geometry (2) to be represented on the drive belt, the projections (3a, 3b), which are arranged spaced apart from one another and each have a head surface (7) arranged spaced apart from a base surface (8) of the geometry (2) and lateral surfaces (5, 6) at opposing sides, and wherein mutually opposite lateral surfaces (5,6) of projections (3a, 3b) adjacent to one another and in each case a base surface (8) present between two adjacent projections (3a, 3b) in each case delimit a gap (4) of the geometry (2);
b) placing a textile layer (12) on the geometry (2) such that the textile layer (12), on the one hand, is supported on the head surfaces (7) of the projections (3a, 3b) and that, on the other hand, in each case a section (13) of the textile layer (12) extends over each of the gaps (4) of the geometry (2);
c) placing a tension member (14) on the geometry (2) covered with the textile layer (12) such that the tension member (14) is supported on the head surfaces (7) of the projections (3a, 3b) of the geometry (2) and, on the one hand, the textile layer (12) is fixed in the region of the head surfaces (7) of the projections (3a, 3b) between the tension member (14) and the respective head surface (7) and, on the other hand, in each gap (4) is delimited an intermediate space (17) between the section (13) of the textile layer (12) extending over the respective gap (4) and the section (18) of the tension member (14) spanning the gap (4) in question;
d) inserting the mould core (1) into the outer mould (20);
e) introducing a castable elastomer base material (B) into the cavity (22) present between the outer mould (20) and the mould core (1) sitting inside it such that the cavity (22), including the intermediate spaces (17) delimited in the region of the gaps (4) by the section (13) of the textile layer (12) and the tension member (14), are filled with the elastomer base material (B), wherein the sections (13) of the textile layer (12) assigned to the gaps (4) of the geometry (2) are pressed by the elastomer base material (B) against the lateral surfaces (5, 6) of the projections (3a, 3b) and the assigned base surface (8) of the respective gap (4), wherein the area of the textile layer (12), which forms the gaps (4), is stretched to a greater extent than the area of the textile layer (12) which is held by the tension members (14) on the head surfaces (7) of the projections (3a, 3b) of the geometry (2);
f) optionally: pressing of elastomer base material (B) after completely filling the cavity (22) and the gap regions with the base material in order to cause a pressure increase in the cavity (22);
g) optionally: maintaining the pressure acting on the elastomer base material (B) until the elastomer base material (B) has become sufficiently solid;
h) demoulding the obtained drive belt sleeve;
i) optionally: separating the drive belt from the belt sleeve.

2. Method according to claim 1, **characterised in that** the textile layer (12), with its sections (13) extending over the respective gap (4), is drawn into the respective gap (4) of the geometry (2) during the placing of the tension member (14) (workstep c)).

3. Method according to claim 2, **characterised in that** an underpressure is generated in the region of the gaps (4) during the placing of the tension member (12) on the geometry (2).

4. Method according to claim 3, **characterised in that**, in order to apply underpressure to the gaps (4), air is suctioned via at least one evacuation opening (9, 11) which opens into one of the lateral surfaces (5, 6) or the base surface (8), which delimit the respective gap (4).

5. Method according to any one of the preceding claims, **characterised in that** the geometry (2), on which the textile layer (12) is fixed by means of the tension member (14), is formed on the mould core (1).

6. Method according to any one of the preceding claims, **characterised in that** the textile layer (12) is formed in a hose shape.

7. Method according to any one of the preceding claims, **characterised in that** the tension member (14) is placed on the textile layer (12) in two or more strands.

8. Method according to claim 7, **characterised in that** the tension member strands are placed on the textile layer (12) running parallel to one another.

9. Method according to any one of the preceding claims, **characterised in that** the textile layer (12) is impermeable to the elastomer base material.

10. Method according to any one of the preceding claims, **characterised in that** the textile layer (12) is impermeable to air.

11. Method according to claim 9 or 10, **characterised in that** the textile layer (12) comprises a textile ply and a coating carried by the textile ply, which coating causes the respective impermeability of the textile layer (12),

12. Method according to claim 11, **characterised in that** the coating is a film applied on the textile ply.

## Revendications

1. Procédé de fabrication d'une courroie de transmission, comprenant les étapes de travail suivantes :
a) mise à disposition d'un noyau de moule (1) et d'un moule extérieur (20) d'un outil de coulée (G), où le noyau de moule (1) est prévu pour être inséré dans le moule extérieur (20), de sorte qu'une cavité (22) reproduisant la forme de la courroie de transmission à fabriquer est formée entre le moule extérieur (20) et le noyau de moule (1) logé dans celui-ci, et où la surface périphérique du noyau de moule (1) associée à la cavité (22) ou la surface périphérique intérieure (21) du moule extérieur (20) associée à la cavité (22) est pourvue d'une géométrie (2) à reproduire sur la courroie de transmission, laquelle géométrie présente des élévations (3a, 3b) qui sont disposées à distance les unes des autres et présentent chacune une surface de tête (7) disposée à distance d'une surface de base (8) de la géométrie (2) ainsi que des surfaces latérales (5, 6) sur des côtés opposés, et où des surfaces latérales (5, 6) opposées les unes aux autres d'élévations (3a, 3b) voisines les unes des autres et à chaque fois une surface de base (8) présente entre deux élévations (3a, 3b) voisines délimitent chacune un interstice (4) de la géométrie (2) ;
b) pose d'une couche de textile (12) sur la géométrie (2) de telle sorte que la couche de textile (12) s'appuie d'une part sur les surfaces de tête (7) des élévations (3a, 3b) et que, d'autre part, une section (13) de la couche de textile (12) s'étende respectivement par-dessus chacun des interstices (4) de la géométrie (2) ;
c) pose d'un support de traction (14) sur la géométrie (2) recouverte de la couche textile (12), de telle sorte que le support de traction (14) s'appuie sur les faces de tête (7) des élévations (3a, 3b) de la géométrie (2) et que, d'une part, la couche textile (12) est fixée entre le support de traction (14) et la surface de tête (7) respective, dans la zone des faces de tête (7) des élévations (3a, 3b), et que, d'autre part, dans chaque interstice (4), un espace intermédiaire (17) est délimité entre la section (13) de la couche textile (12) qui s'étend sur l'interstice (4) respectif et la section (18) du support de traction (14) qui enjambe l'interstice (4) concerné ;
d) insertion du noyau de moulage (1) dans le moule extérieur (20) ;
e) introduction d'un matériau élastomère (B) de base apte à être coulé, dans la cavité (22) présente entre le moule extérieur (20) et le noyau de moulage (1) logé dans celui-ci, de telle sorte que la cavité (22), y compris les espaces intermédiaires (17) délimités dans la zone des interstices (4) par la partie (13) de la couche textile (12) et le support de traction (14), sont remplis par le matériau de base élastomère (B), les sections (13) de la couche textile (12) associées aux interstices (4) de la géométrie (2) étant pressées par le matériau de base élastomère (B) contre les surfaces latérales (5, 6) des élévations (3a, 3b) et contre la surface de base (8) associée de l'interstice (4) respectif, la zone de la couche textile (12) qui forme les interstices (4) étant plus fortement étirée que la zone de la couche textile (12) qui est maintenue par les supports de traction (14) sur les surfaces de tête (7) des élévations (3a, 3b) de la géométrie (2) ;
f) facultativement : presser à nouveau du matériau de basé élastomère (B) après le remplissage complet de la cavité (22) et des zones d'interstice avec le matériau de base, afin de provoquer une augmentation de pression dans la cavité (22) ;
g) facultativement : maintenir la pression agissant sur le matériau de base élastomère (B) jusqu'à ce que le matériau de base élastomère (B) soit devenu suffisamment solide ;
h) démoulage de l'enroulement de la courroie de transmission obtenu ;
i) facultativement : séparation de la courroie de transmission de l'enroulement de la courroie.

2. Procédé selon la revendication 1, **caractérisé en ce que** la couche textile (12) est tirée, pendant la mise en place du support de traction (14) (étape de travail c)), dans l'interstice respectif (4) de la géométrie (2) avec ses sections (13) s'étendant sur l'espace respectif (4).

3. Procédé selon la revendication 2, **caractérisé en ce que**, pendant la pose du support de traction (12) sur la géométrie (2), une dépression est générée dans la zone des interstices (4).

4. Procédé selon la revendication 3, **caractérisé en ce que**, pour mettre les interstices (4) en dépression, de l'air est aspiré par au moins une ouverture d'évacuation (9,11) qui débouche dans l'une des surfaces latérales (5, 6) ou de la surface de base (8) qui délimitent l'interstice (4) respectif.

5. Procédé selon l'une des revendications précédentes, **caractérisé en ce que** la géométrie (2) à laquelle la couche textile (12) est fixée au moyen du support de traction (14) est formée au niveau du noyau de moulage (1).

6. Procédé selon l'une des revendications précédentes, **caractérisé en ce que** la couche textile (12) a une forme tubulaire.

7. Procédé selon l'une des revendications précédentes, **caractérisé en ce que** le support de traction (14) est posé sur la couche textile (12) en deux ou plusieurs brins.

8. Procédé selon la revendication 7, **caractérisé en ce que** les brins du support de traction sont posés sur la couche textile (12) en s'étendant parallèlement les uns aux autres.

9. Procédé selon l'une des revendications précédentes, **caractérisé en ce que** la couche textile (12) est imperméable au matériau de base élastomère.

10. Procédé selon l'une des revendications précédentes, **caractérisé en ce que** la couche textile (12) est imperméable à l'air.

11. Procédé selon la revendication 9 ou 10, **caractérisé en ce que** la couche textile (12) comprend une couche textile et un revêtement porté par la couche textile, qui provoque l'imperméabilité respective de la couche textile (12).

12. Procédé selon la revendication 11, **caractérisé en ce que** le revêtement est un film appliqué sur la couche textile.
